# NEUE EUROPÄISCHE PATENTSCHRIFT

(11) **EP 2 269 049 B2**
(45) Veröffentlichungstag und Bekanntmachung des Hinweises auf die Entscheidung über den Einspruch: **10.05.2017**
(45) Hinweis auf die Patenterteilung: 10.10.2012
(21) Anmeldenummer: 09732339.8
(22) Anmeldetag: 25.03.2009
(51) Int. Cl.: G01N 27/87

(54) **VERFAHREN UND VORRICHTUNG ZUM DETEKTIEREN VON OBERFLÄCHENNAHEN DEFEKTEN MITTELS STREUFLUSSMESSUNG**
METHOD AND DEVICE FOR DETECTING NEAR-SURFACE DEFECTS BY MEANS OF MAGNETIC LEAKAGE FLUX MEASUREMENT
PROCÉDÉ ET DISPOSITIF DE DÉTECTION DE DÉFAUTS AU VOISINAGE D'UNE SURFACE PAR MESURE DE FLUX DE DISPERSION

(30) Priorität: 16.04.2008 DE 102008020194
(43) Veröffentlichungstag der Anmeldung: 05.01.2011
(73) Patentinhaber: Institut Dr. Foerster GmbH & Co. KG, 72766 Reutlingen (DE)
(72) Erfinder: BRAUN, Heinrich, 72768 Reutlingen (DE)
(74) Vertreter: Patentanwälte Ruff, Wilhelm, Beier, Dauster & Partner mbB
(86) Internationale Anmeldenummer: PCT/EP2009/002153
(87) Internationale Veröffentlichungsnummer: WO 2009/127316

(56) Entgegenhaltungen:
- WO-A-02/06812
- US-A- 4 492 115
- US-A- 5 331 278
- PASHAGIN A I ET AL: "Magnetic fields of surface flaws with combined magnetization of products" SOVIET JOURNAL OF NONDESTRUCTIVE TESTING USA, Bd. 19, Nr. 2, Februar 1983 (1983-02), Seiten 144-150, XP008110790 ISSN: 0038-5492
- LUTZ, HANS: 'Stahl und Eisen', Bd. 94, 1974 Seiten 814 - 818

## Beschreibung

### HINTERGRUND UND STAND DER TECHNIK

Die Erfindung bezieht sich auf ein Verfahren zum Detektieren von oberflächennahen Defekten in einem mindestens teilweise aus ferromagnetischem Material bestehenden Prüfling sowie auf eine zur Durchführung des Verfahrens geeignete Vorrichtung zum Detektieren von oberflächennahen Defekten.

Magnetische Streuflussverfahren sind bei der Prüfung von Halbzeug auf oberflächennahe Defekte eine wichtige Komponente zur Qualitätsüberwachung im Herstellungsprozess der Produkte. Magnetische Streuflussverfahren sind gegenüber einigen störenden Eigenschaften von Halbzeug, wie beispielsweise Rauhigkeit der Oberfläche oder Zunderbelag, weniger empfindlich als beispielsweise das Wirbelstromverfahren oder die Ultraschallprüfung. Dadurch ergibt sich ein besseres Verhältnis zwischen Nutzsignal und Störsignal (N/S-Verhältnis), wodurch eine zuverlässigere Fehlererkennung ermöglicht wird.

Bei einer Vorrichtung zum Detektieren von oberflächennahen Defekten mittels Streuflussmessung wird ein Prüfvolumen des Prüflings mittels einer Magnetisierungseinrichtung magnetisiert und mit Hilfe mindestens einer magnetfeldempfindlichen Prüfsonde (Streuflusssonde) zur Erfassung von durch die Defekte verursachten magnetischen Streufeldern abgetastet.

Der von einer Magnetisierungseinrichtung im Prüfling erzeugte magnetische Fluss verteilt sich im defektfreien Material räumlich im Wesentlichen homogen. Risse oder andere Defekte wirken als Bereiche erhöhten magnetischen Widerstandes, so dass Feldanteile in der Nähe eines Defektes um den Defekt herumgeleitet und im oberflächennahen Bereich auch aus dem Metall herausgedrängt werden. Die heraus gedrängten Feldanteile werden bei den Streuflussverfahren zum Nachweis der Defekte detektiert. Bei einer Streuflussmessung ist ein oberflächennaher Defekt (auch Oberflächenfehler genannt) dann detektierbar, wenn die aus dem Prüfling verdrängten Feldanteile bis zum Bereich der Prüfsonde reichen und dort eine für die Detektion ausreichende Feldstärke haben.

Die Oberflächenfehler kann man z.B. nach Ihrer Lage im Material klassifizieren. Es gibt oberflächennahe Defekte, die bis zur Oberfläche des Prüflings reichen, also beispielsweise von der Oberfläche in das Materialinnere hineinführende Risse oder zur Oberfläche offene Lunker odgl.. Diese kann man als "offene Fehler" oder "sichtbare Fehler" bezeichnen. Es gibt jedoch auch Defekte, die unter einer mehr oder weniger ungestört erscheinenden Oberfläche verborgen liegen, also beispielsweise Risse in der Tiefe des Materials, wie Spannungsrisse, oder Risse, die in einer Herstellungsstufe zwar zur Oberfläche reichen, in einem nachfolgenden Walzprozess jedoch durch oberflächennahe Verformung wieder geschlossen wurden. Diese Fehler kann man als "verborgene Fehler" bezeichnen, sie werden bei Prüflingen aus Vollmaterial auch als "Kernfehler" und bei rohrförmigen Prüflingen als "Wandfehler" bezeichnet.

Die Streufluss-Prüfverfahren bzw. Prüfvorrichtungen werden abhängig davon, wie das zu prüfende Material magnetisiert wird, in Verfahren bzw. Vorrichtungen mit Gleichfeldmagnetisierung (DC-Streuflussprüfung) und Verfahren bzw. Vorrichtungen mit Wechselfeldmagnetisierung (AC-Streuflussprüfung) unterteilt.

Die Verfahren mit Gleichfeldmagnetisierung werden bei der Prüfung von Rohren eingesetzt, wo sowohl Außenfehler, d.h. Fehler an der Außenseite des Rohres, als auch Innenfehler, d.h. Fehler an der Rohrinnenseite, erfasst werden sollen. Man nutzt hier einen wesentlichen Vorteil der Gleichfeldmagnetisierung, nämlich die große Eindringtiefe, so dass auch Innenfehler erfasst werden können. Bei sehr schmalen und/oder schräg einlaufenden Fehlern werden dagegen häufig nur unbefriedigende Prüfergebnisse erzielt.

Ein wesentlicher Vorteil von Streuflussverfahren mit Wechselfeldmagnetisierung ist die sehr hohe Auflösung für kleinste Fehler an der Außenoberfläche, d.h. für offene Fehler. Daher wird die Wechselfeldmagnetisierung in der Regel dann angewendet, wenn nur außen liegende Fehler nachgewiesen werden sollen, was beispielsweise bei Vollmaterial wie Rundknüppeln, Vierkantknüppeln oder Stabstahl häufig der Fall ist. Nachteilig ist, dass durch die geringe Eindringtiefe des Wechselfeldes tiefe Fehler, die zur Oberfläche nicht offen sind (verborgene Fehler), häufig nur unbefriedigend oder gar nicht zu erkennen sind.

Die DE 10 2004 035 174 B4 beschreibt ein Verfahren und eine Vorrichtung zur zerstörungsfreien Prüfung von Rohren aus ferromagnetischem Stahl mittels Streufluss, bei dem das Rohr (der Prüfling) mittels Gleichfeld magnetisiert wird. Um eine bessere Fehlerzuordnung zwischen Rohraußenfläche und Rohrinnenfläche zu ermöglichen, wird die in der vertikalen Richtung sich verändernde Amplitude der Horizontalfeldkomponente des magnetischen Streuflusses einerseits in einem oberflächennahen Abstand von der Rohraußenfläche und andererseits in einem weiter davon entfernt liegenden Abstand erfasst und die erfassten Signale mittels Differenzbildung in Beziehung zueinander gesetzt, wobei auch die Amplitude der Vertikalfeldkomponente des magnetischen Streuflusses zusätzlich erfasst und zur im oberflächennahen und/oder zur im weiter davon entfernten Abstand gemessenen Amplitude der Horizontalfeldkomponente ins Verhältnis gesetzt wird.

Die DE 10 2006 019 128 A1 beschreibt ein Streuflussmessgerät zur Detektion von oberflächennahen und oberflächenfernen Defekten an ferromagnetischen Prüflingen mittels Streuflussmessung, wobei der Prüfling ebenfalls über ein magnetisches Gleichfeld magnetisiert wird. Um zu erreichen, dass die unterhalb der Materialoberfläche des Prüflings verborgenen Fehler besser mittels Streuflussbeobachtung detektiert werden können, ohne dass die Empfindlichkeit für oberflächennahe Fehler reduziert wird, ist auf der Seite der Prüfsohde eine Kombination aus mindestens einer flach liegenden Spule oder Sonde und mindestens einer senkrecht dazu orientierten Spule oder Sonde vorgesehen.

Der Fachartikel "Magnetic Fields of surface flaws with combind magnetization of products" von A. I. Pashagin, V. E. Shcherbinin und S. A. Donskoi in: Soviet Jornal of Nondestructive Testing USA, Bd. 19, Nr. 2, Februar 1983 (1983-02) Seiten 144 bis 150, beschreibt ein Verfahren und eine Vorrichtung zum Detektieren von oberflächennahen Defekten in magnetisierbaren Prüflingen, bei dem ein Prüfvolumen des Prüflings mittels eines magnetischen Gleichfelds und gleichzeitig mittels eines dem Gleichfeld überlagerten magnetischen Wechselfeldes magnetisiert wird und ein Prüfvolumen des Prüflings zur Erfassung von durch Defekte verursachten magnetischen Streufeldern abgetastet wird. Der Prüfling wird stationär an einem Magneten angebracht, der das Gleichfeld erzeugt. Eine weitere Magnetanordnung erzeugt ein magnetisches Wechselfeld mit Wechselfeldfrequenzen aus dem Bereich zwischen 0,5 kHz und 5 kHz. Der Elektromagnet zur Erzeugung des Wechselfeldes wird gemeinsam mit dem Wandler zur Erfassung von Streufeldern über die Oberfläche des stationären Prüflings bewegt.

### AUFGABE UND LÖSUNG

Es ist eine Aufgabe der Erfindung, ein Verfahren zum Detektieren von oberflächennahen Defekten mittels Streuflussmessung sowie eine entsprechende Vorrichtung bereit zu stellen, die es erlauben, sowohl zur Oberfläche offene Fehler, als auch verborgene Fehler mit hoher Empfindlichkeit zu detektieren.

Zur Lösung dieser Aufgabe stellt die Erfindung ein Verfahren mit den Merkmalen von Anspruch 1 sowie eine Vorrichtung mit den Merkmalen von Anspruch 7 bereit. Vorteilhafte Weiterbildungen sind in den abhängigen Ansprüchen angegeben. Der Wortlaut sämtlicher Ansprüche wird durch Bezugnahme zum Inhalt der Beschreibung gemacht.

Bei einem Verfahren zum Detektieren von oberflächennahen Defekten in einem mindestens teilweise aus ferromagnetischem Material bestehenden Prüfling wird ein Prüfvolumen des Prüflings mittels einer Magnetisierungseinrichtung magnetisiert und mittels mindestens einer magnetfeldempfindlichen Prüfsonde zur Erfassung von durch Defekte verursachten magnetischen Streufeldern abgetastet. Dabei wird das Prüfvolumen mittels eines magnetischen Gleichfeldes und gleichzeitig mittels eines dem Gleichfeld überlagerten magnetischen Wechselfeldes magnetisiert.

Der Begriff "Prüfvolumen" bezeichnet hierbei einen Volumenbereich des Prüflings, der mit Hilfe der sich überlagernden magnetischen Felder (Wechselfeld und Gleichfeld) magnetisiert wird und der dabei gleichzeitig derart im Erfassungsbereich (mindestens) einer magnetfeldempfindlichen Prüfsonde liegt, dass magnetische Streufelder, die von innerhalb des Prüfvolumens liegenden Defekten verursacht werden, durch die Prüfsonde erfasst bzw. detektiert werden können.

Es wird somit eine kombinierte Wechselfeldmagnetisierung (AC-Magnetisierung) und Gleichfeldmagnetisierung (DC-Magnetisierung) genutzt. Es hat sich gezeigt, dass durch die kombinierte AC/DC-Magnetisierung die Detektionstiefe gegenüber herkömmlichen AC-Streuflussverfahren wesentlich erhöht werden kann, ohne die Detektionsgenauigkeit und hohe Auflösung für zur Oberfläche offene Fehler nachteilig zu beeinflussen. Bei geeigneter Wahl der Magnetisierungsparameter können somit AC-Streuflussverfahren wesentlich verbesserte Ergebnisse liefern, wenn der zu prüfende Prüfling zusätzlich einem magnetischen Gleichfeld geeigneter Größe ausgesetzt wird. Die verbesserte Detektionsempfindlichkeit vor allem für tiefer liegende Defekte wird darauf zurückgeführt, dass durch das zusätzlich zum magnetischen Wechselfeld wirkende magnetische Gleichfeld der Arbeitspunkt der magnetischen Prüfung auf der materialspezifischen Hysteresekurve in einen günstigeren Bereich verschoben wird. Die Stärke des magnetischen Gleichfeldes wird dabei vorteilhaft so dosiert, dass der Streuflussmechanismus für das Wechselfeld, d.h. der Wirkmechanismus der Wechselfeldprüfung, im Vergleich zu herkömmlichen AC-Verfahren im Wesentlichen erhalten bleibt.

Beim eingangs erwähnten Stand der Technik wird versucht, die Detektionseigenschaften des Streuflussverfahrens durch aufwändige Konstruktionen der Streuflusssonden zu verbessern. Grenzen werden dann erreicht, wenn das zu erfassende Streufeld zu schwach ist. Im Gegensatz dazu geht die Erfindung einen anderen Weg, da hier direkt Einfluss auf die Entstehung der Messgröße, d.h. des zu detektierenden Streufeldes genommen wird. Verbesserte Messergebnisse können daher unabhängig vom Sondentyp erreicht werden.

Das Verfahren und die Vorrichtung sind zur Erfassung von durch Defekte verursachten magnetischen Streufeldern ausgelegt, also als Streufluss-Prüfverfahren bzw. Streufluss-Prüfvorrichtung. Entsprechende Streufluss-Prüfsonden können dementsprechend als (passive) Streuflusssonden ausgelegt sein, die im Gegensatz zu aktiv bestromten Wirbelstromsonden nicht erregt werden und dementsprechend selbst kein Magnetfeld erzeugen. Eine magnetfeldempfindliche Streuflusssonde erfasst im Wesentlichen nur die Inhomogenitäten des magnetischen Flusses. Die Auswertung der Sondensignale ist dementsprechend auf die Auswertung von Streuflusssignalen ausgelegt, so dass z.B. Impedanzänderungen und/oder Änderungen des magnetischen Widerstandes nicht ausgewertet werden bzw. nicht ausgewertet werden müssen. Die Erzeugung des Magnetisierungsfeldes wird durch eine von der Prüfsonde entkoppelte, gesonderte Magnetisierungseinrichtung gewährleistet.

Für die Prüfung wird eine Relativbewegung zwischen dem Prüfling und dem auf den Prüfling wirkenden magnetischen Gleichfeld und dem dem Gleichfeld überlagerten Wechselfeld erzeugt, wobei die Relativbewegung eine Relativgeschwindigkeitskomponente hat, die im Wesentlichen in Richtung der magnetischen Feldlinien des Gleichfeldes innerhalb des Prüflings gerichtet ist. Wird das magnetische Gleichfeld so in den Prüfling eingekoppelt, dass seine Feldlinien innerhalb des Prüflings überwiegend etwa in Umfangsrichtung und/oder im Wesentlichen senkrecht zu einer Längsachse des Prüflings verlaufen, so kann die Relativbewegung durch eine relative Rotation zwischen dem Prüfling und einer Gleichfeld-Magnetisierungseinheit erreicht werden. Durch die relative Rotation von magnetisierendem Gleichfeld und Prüfling, kann erreicht werden, dass sich die Stärke des magnetischen Gleichfeldes aus "Sicht" des Prüfvolumens z.B. periodisch ändert (allerdings ohne seine Polarität zu ändern). Durch das sich zeitlich ändernde Gleichfeld können im elektrisch leitenden Prüflingsmaterial Wirbelströme erzeugt werden, die einem Eindringen des Gleichfeldes in die Tiefen des Prüflings entgegenwirken und dafür sorgen, dass sich das magnetische Gleichfeld (bzw. die dadurch im Prüflingsmaterial erzeugte magnetische Induktion) im oberflächennahen Bereich des Prüflings konzentriert, wo auch das magnetische Wechselfeld wirksam ist, welches prinzipbedingt keine allzu große Eindringtiefe in das Material hat. Die Konzentration des auf das Gleichfeld zurückgehenden Induktionsflusses in der Nähe der Prüflingsoberfläche kann dort die Permeabilität der Prüflingsmaterials derart stark herabsetzen, dass im Wesentlichen nur noch der Leitwert des Prüflingsmaterials, nicht aber dessen Permeabilität, ein Eindringen des Wechselfeldes in das Innere des Prüflings hemmt. Hierdurch kann die Eindringtiefe des Wechselfeldes bzw. des darauf zurückgehenden Induktionsflusses gegenüber einer Prüfung ohne gleichzeitige Gleichfeld-Magnetisierung vergrößert werden. Durch eine solche Überlagerung von magnetischem Gleichfeld und magnetischem Wechselfeld nahe der Oberfläche des Prüflings im Detektionsbereich der Prüfsonde kann die Detektionsempfindlichkeit für oberflächennahe Defekte, insbesondere für oberflächennahe verborgene Defekte, gegenüber herkömmlichen Verfahren verbessert werden kann.

Der Mindestwert der Relativgeschwindigkeit zur Erzielung einer vorteilhaften Konzentration der magnetischen Induktion (bzw. der magnetischen Flussdichte) in unmittelbarer Nähe der Oberfläche des Prüflingsmaterials hängt unter anderem von der Permeabilität des Prüflingsmaterials, von der Geometrie des Prüflings sowie von der Geometrie der Prüfanordnung (z.B. Polflächen und Polabstand von Polen der Gleichfeld-Magnetisierungseinheit) ab. Die in Richtung der Gleichfeldlinien gemessene Komponente der Relativgeschwindigkeit beträgt mindestens 0,3 m/s. Besonders günstige Werte können beispielsweise im Bereich von 1 m/s bis 5 m/s liegen, z.B. um 3 m/s liegen.

Eine relative Rotation von Prüfling und magnetischem Gleichfeld kann beispielsweise dadurch erreicht werden, dass die Gleichfeld-Magnetisierungsmittel an einem Rotierkopf so angebracht sind, dass sie um einen Prüfling herumbewegt werden, wobei sich der Prüfling selbst nicht um seine Achse drehen muss. Es ist auch möglich, dass der Prüfling um seine Achse rotiert und die Gleichfeld-Magnetisierungsmittel statisch angebracht sind. Auch eine Kombination beider Bewegungen ist möglich. Bei gleichzeitiger Längsbewegung des Prüflings durch einen Rotierkopf ist eine schraubenförmige Abtastung der Prüflingsoberfläche möglich, die bei geeigneter Anpassung von Durchlaufgeschwindigkeit des Prüflings und Drehgeschwindigkeit eines Rotierkopfes für eine lückenlose Prüfung genutzt werden kann.

Die Frequenz des magnetischen Wechselfeldes kann insbesondere im Hinblick auf die gewünschte Empfindlichkeit für oberflächennahe Defekte und auf den gewünschten Prüfdurchsatz bzw. die erwünschte Abtastgeschwindigkeit optimiert werden. Bei der beanspruchten Erfindung wird ein magnetisches Wechselfeld mit einer Wechselfeldfrequenz von mindestens 1 kHz erzeugt. Die Wechselfeldfrequenz kann vorzugsweise zwischen 3 kHz und 12 kHz liegen, beispielsweise im Bereich von ca. 6 kHz bis 8 kHz. Insbesondere im Bereich zwischen 3 kHz und 12 kHz lassen sich hohe Oberflächenempfindlichkeiten bei gleichzeitig ausreichend großen Abtastgeschwindigkeiten und dementsprechend großen Prüfdurchsätzen bei lückenloser Prüfung erzielen.

Es hat sich gezeigt, dass es für zahlreiche Prüfaufgaben günstig sein kann, wenn die magnetische Feldstärke H_{DC} des Gleichfeldes im Prüfvolumen mindestens halb so groß, insbesondere mindestens genauso groß ist wie die magnetische Feldstärke H_{AC} des Wechselfeldes. Das 20fache der Wechselfeldstärke H_{AC} sollte in der Regel nicht überschritten werden. Bei manchen Verfahren kann es günstig sein, wenn ein Feldstärkeverhältnis H_{DC}/H_{AC} zwischen der magnetischen Feldstärke des Gleichfeldes und der magnetischen Feldstärke des Wechselfeldes zwischen 1 und 20 verwendet wird, insbesondere zwischen 1 und 5. Maßgebliche Einflussfaktoren für die Einstellung eines geeigneten Feldstärkeverhältnisses sind unter anderem die Sättigungsinduktion des Prüflingsmaterials und die Fehlertiefe. Durch Einstellung eines günstigen Feldstärkeverhältnisses H_{DC}/H_{AC} kann die Detektionstiefe des Kombinationsverfahrens erhöht werden, ohne die Auflösung für Außenfehler wesentlich zu beeinträchtigen.

Werden für die Erzeugung des Wechselfeldes und des Gleichfeldes identische oder elektrisch ähnliche Spulenanordnungen verwendet, so kann das Feldstärkeverhältnis H_{DC}/H_{AC} über ein entsprechendes Erregungsstromverhältnis I_{DC}/I_{AC} zwischen der Stromstärke I_{DC} des Gleichstroms und der Stromstärke I_{AC} des Wechselstroms eingestellt bzw. definiert werden, so dass dann auch die Bedingung 0.5 ≤ I_{DC}/I_{AC} ≤ 20, insbesondere 1 ≤ I_{DC}/I_{AC} ≤ 5 gelten kann. Die Erregungsströme für Gleichfeld und Wechselfeld liegen in der Regel im Bereich von einem oder mehreren Ampere, um eine hinreichende Magnetisierung des Prüfvolumens zu gewährleisten.

Bei manchen Ausführungsformen beträgt die magnetische Feldstärke H_{DC} des Gleichfeldes zwischen ca. 10% und 95% der Sättigungsfeldstärke des Prüflingsmaterials im Prüfvolumen, vorzugsweise zwischen ca. 70% und ca. 85% der Sättigungsfeldstärke. Dadurch können in vielen Fällen bessere Ergebnisse erzielt werden als bei voller Sättigung des Materials im Prüfvolumen.

Weiterhin hat es sich als günstig herausgestellt, wenn eine Feldstärkensumme ΣH=H_{AC} + H_{DC} der magnetischen Feldstärke H_{DC} des Gleichfeldes und der magnetischen Feldstärke H_{AC} des Wechselfeldes im Bereich zwischen 10% und 100%, insbesondere im Bereich zwischen ca. 70% und ca. 85% der Sättigungsfeldstärke des Prüflingsmaterials beträgt. Es wird davon ausgegangen, dass durch die kombinierte Beaufschlagung mit magnetischem Gleichfeld und magnetischem Wechselfeld im Prüflingsmaterial ein Sättigungsbereich entsteht, der von der Oberfläche ausgehend tiefer in das Material hineinreicht als bei reiner Wechselfeld-Magnetisierung. Die Materialqualität und die Beschaffenheit der Außenfläche (z.B. walzrauh und/oder verzundert oder blank) spielen bei der Einstellung geeigneter Feldstärken bzw. Feldstärkenverhältnisse eine wesentliche Rolle.

Bei der beanspruchten Erfindung werden das Gleichfeld und das Wechselfeld in das Prüfvolumen derart eingekoppelt, dass der durch das Gleichfeld erzeugte Induktionsfluss und der durch das Wechselfeld erzeugte Induktionsfluss im Wesentlichen die gleiche Ausrichtung haben, also durch im Wesentlichen gleich ausgerichtete Feldlinien charakterisiert werden können. Diese "gleichsinnige" Überlagerung von magnetischem Wechselfeld (zeitlich schnell wechselnde Polarität) und magnetischem Gleichfeld (gleichbleibende Polarität, ggf. zeitliche Änderung der im Prüfvolumen wirksamen Feldstärke bzw. der Stärke des im Prüfvolumen wirksamen, auf das Gleichfeld zurückgehenden Induktionsflusses) im Prüfvolumen hat sich als besonders wirksam im Hinblick auf die Verbesserung der Detektionsempfindlichkeit herausgestellt.

Wenn bei nicht zur beanspruchten Erfindung gehörenden Beispielen der durch das Gleichfeld induzierte Induktionsfluss quer, insbesondere im Wesentlichen senkrecht zu dem durch das Wechselfeld induzierten Induktionsfluss ausgerichtet ist, kann in erster Linie eine Verbesserung des Signal/Rauschverhältnisses erzielt werden. Unabhängig von den relativen Ausrichtungen von Gleichfeld und Wechselfeld kann nämlich durch das zusätzlich zum Wechselfeld wirksame Gleichfeld eine Homogenisierung des Prüfvolumens im Hinblick auf Permeabilitätsinhomogenitäten und die Wirkung von lokalen Kaltverformungen erreicht werden. Dadurch können sich je nach Werkstoffzusammensetzung und Art des Herstellungsverfahrens eine Verringerung des Störuntergrundes bzw. eine Verbesserung des Signal/Rauschverhältnisses und eine damit verbundene erhöhte Detektionsempfindlichkeit besonders für kleine Defekte ergeben.

Die gleiche Ausrichtung von magnetischem Gleichfeld und magnetischem Wechselfeld kann konstruktiv beispielsweise dadurch erreicht werden, dass zur Erzeugung des Gleichfeldes und zur Erzeugung des Wechselfeldes dieselbe Spulenanordnung (AC/DC-Spulenanordnung) der Magnetisierungseinrichtung verwendet wird. Es ist jedoch auch möglich, dass zur Erzeugung des Wechselfeldes eine Wechselfeld-Spulenanordnung (AC-Spulenanordnung) und zur Erzeugung des Gleichfeldes eine von der Wechselfeld-Spulenanordnung gesonderte Gleichfeld-Spulenanordnung (DC-Spulenanordnung) verwendet wird. Diese können zur Erzeugung unterschiedlicher Ausrichtung oder gleicher Ausrichtung der entsprechenden Induktionsflüsse angeordnet sein.

Eine zur Durchführung des Verfahrens geeignete Vorrichtung zum Detektieren von oberflächennahen Defekten in einem mindestens teilweise aus ferromagnetischem Material bestehendem Prüfling hat eine Magnetisierungseinrichtung zur Magnetisierung eines Prüfvolumens des Prüflings und mindestens eine magnetfeldempfindliche Prüfsonde zur Erfassung von durch die Defekte verursachten magnetischen Streufeldern. Die Magnetisierungseinrichtung umfasst eine Gleichfeld-Magnetisierungseinheit zur Erzeugung eines magnetischen Gleichfeldes und eine gleichzeitig mit der Gleichfeld-Magnetisierungseinheit aktivierbare Wechselfeld-Magnetisierungseinheit zur Erzeugung eines dem Gleichfeld überlagerten magnetischen Wechselfeldes im Prüfvolumen.

Eine zugeordnete Auswerteeinrichtung, die die Signale der mindestens einen magnetfeldempfindlichen Prüfsonde verarbeitet, ist durch geeignete Hardware und/oder Software dafür eingerichtet, die erfassten Inhomogenitäten des magnetischen Flusses auszuwerten und zu Fehlersignalen zu verarbeiten. Andere Eigenschaftsänderungen im Bereich der Prüfsonde, z.B. Änderungen des Widerstandes und/oder Impedanzänderungen, werden bei einer reinen Streuflussauswertung nicht ausgewertet.

Bei manchen Ausführungsformen hat die Magnetisierungseinrichtung mindestens eine AC/DC-Spulenanordnung, die gleichzeitig elektrisch an eine Wechselspannungsquelle und an eine Gleichspannungsquelle angeschlossen oder anschließbar ist. Mit Hilfe der AC/DC-Spulenanordnung ist es möglich zu erreichen, dass im Prüfvolumen die Feldlinien des Wechselfeldes im Wesentlichen parallel zu den Feldlinien des Gleichfeldes verlaufen.

Bei manchen Ausführungsformen hat die Magnetisierungseinrichtung mindestens eine an eine Wechselspannungsquelle angeschlossene Wechselfeld-Spulenanordnung (AC-Spulenanordnung) und mindestens eine von der AC-Spulenanordnung gesonderte, an eine Gleichspannungsquelle angeschlossene Gleichfeld-Spulenanordnung (DC-Spulenanordnung). Hierdurch ist es bei Bedarf möglich, die einander überlagerten Felder so in das Prüfvolumen einzukoppeln, dass die vom Wechselfeld erzeugten Feldlinien quer, beispielsweise im Wesentlichen senkrecht zu den vom Gleichfeld erzeugten Feldlinien verlaufen. Auch eine parallele Ausrichtung der Feldlinien von Gleichfeld und Wechselfeld ist mit gesonderten Spulenanordnungen möglich.

Bei manchen Ausführungsformen umfasst die Magnetisierungseinrichtung mindestens ein Magnetisierungsjoch mit einem Jochkern, auf dem eine AC-Spulenanordnung und eine DC-Spulenanordnung gewickelt ist. Es kann sich dabei um räumlich getrennte Spulenanordnungen handeln, die an elektrisch entkoppelte Spannungsquellen angeschlossen sind. Es ist jedoch auch möglich, dass mindestens eine kombinierte AC/DC-Spulenanordnung auf das Magnetisierungsjoch aufgewickelt ist. In jedem Fall sorgt der gemeinsame Jochkern dafür, dass das Wechselfeld und das überlagerte Gleichfeld im Wesentlichen die gleiche Ausrichtung im Prüfvolumen haben.

Es gibt zahlreiche Varianten der Realisierung einer Vorrichtung zur kombinierten AC/DC-Streuflussprüfung. Beispielsweise kann die Gleichfeld-Magnetisierungseinheit eine direkt an eine entsprechende DC-Spulenanordnung angeschlossene Gleichspannungsquelle aufweisen. Bei manchen Ausführungsformen hat die Gleichfeld-Magnetisierungseinheit eine Wechselspannungsquelle und einen an die Wechselspannungsquelle angeschlossenen Gleichrichter, an dessen Ausgängen die zum Betreiben der DC-Spulenanordnung erforderliche Gleichspannung abgegriffen werden kann. Bei dieser Variante ist es möglich, dass zwischen der Wechselspannungsquelle und dem Gleichrichter ein berührungslos arbeitender induktiver Übertrager (z.B. Rotierübertrager) angeordnet ist. Damit ist es auf einfache Weise möglich, die Spannungsquelle zum Betreiben der Gleichfeldmagnetisierung an einem ortsfesten Teil einer Prüfvorrichtung anzubringen und die DC-Spulenanordnung an einen beweglichen Teil der Prüfanordnung, beispielsweise an einem Rotierkopf.

Bei einfachen Geräten kann mit einer festen Einstellung des Verhältnisses zwischen den Feldstärken des magnetischen Wechselfeldes und des magnetischen Gleichfeldes gearbeitet werden. Bei manchen Ausführungsformen ist jedoch vorgesehen, dass die Wechselspannungsquelle und die Gleichspannungsquelle unabhängig voneinander einstellbar sind. Hierdurch wird eine besonders genaue Anpassung der Feldstärken von Wechselfeld und Gleichfeld und auch des entsprechenden Feldstärkeverhältnisses an die Prüflingsgeometrie und das Prüflingsmaterial möglich, wodurch die Detektionsempfindlichkeit für jeden Prüfvorgang individuell optimiert werden kann.

Für die Erfassung des Streuflusses bei der kombinierten AC/DC-Magnetisierung können alle bekannten Typen von Streufluss-Prüfsonden verwendet werden, insbesondere induktive Prüfsonden, Hall-Sonden oder GMR (Giant-Magneto-Resistance)-Sensoren oder Kombinationen daraus, beispielsweise auch Sondensysteme der in der Einleitung genannten Konstruktionen.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können. Ausführungsbeispiele der Erfindung sind in den Zeichnungen dargestellt und werden im Folgenden näher erläutert.

### KURZBESCHREIBUNG DER ZEICHNUNGSFIGUREN

- Fig. 1: zeigt eine schematische Ansicht eines Rotierkopf-Systems zur Streuflussprüfung von durchlaufendem Rundmaterial;
- Fig. 2: zeigt schematisch ein statisches Streufluss-Messsystem mit kombinierter AC/DC-Magnetisierung zur Prüfung von rotierenden Prüflingen;
- Fig. 3: zeigt schematisch eine Seitenansicht eines nicht zur beanspruchten Erfindung gehörenden Beispiels eines rotierenden Prüfsystems mit um den Prüfling rotierender Wechselfeldmagnetisierung und statischer Gleichfeldmagnetisierung;
- Fig. 4: zeigt schematisch eine Schaltungsanordnung für eine kombinierte AC/DC-Magnetisierung mit zwei identischen Magnetisierungsjochen, die jeweils eine kombinierte AC/DC-Spulenanordnung tragen;
- Fig. 5: zeigt die Geometrie eines Versuchs-Prüfteils mit vier unterschiedlichen, zur Oberfläche offenen Fehlern und einem verborgenen Fehler;
- Fig. 6 und 7: zeigen Darstellungen der durch die Fehler erzeugten Fehleramplituden in der Impedanzebene; und
- Fig. 8 und 9: zeigen umfangsbezogene Darstellungen der Fehleramplituden.

### DETAILLIERTE BESCHREIBUNG BEVORZUGTER AUSFÜHRUNGSFORMEN

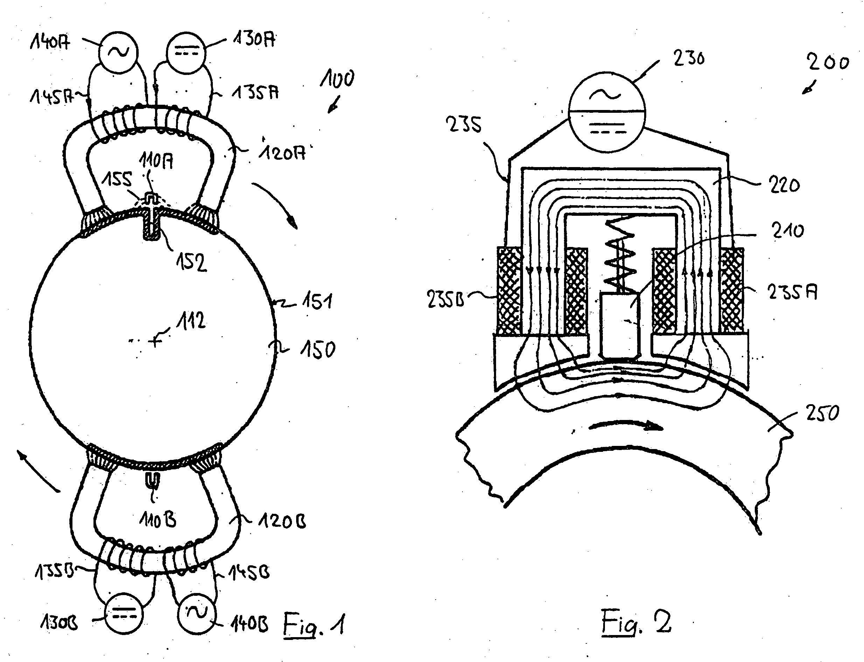

Fig. 1 zeigt schematisch eine axiale Ansicht wesentlicher Bauteile einer Vorrichtung 100 zum Detektieren von oberflächennahen Defekten in ferromagnetischem Prüfgut mittels Streuflussmessung. Die im Folgenden auch als Streufluss-Prüfvorrichtung oder verkürzt als Prüfvorrichtung bezeichnete Prüfvorrichtung 100 kann unter anderem zur produktionsnahen, zerstörungsfreien Prüfung von langgestrecktem Halbzeug mit Kreisquerschnitt, wie z.B. Stabstahl oder Rundknüppeln oder auch zur Prüfung von Rohren eingesetzt werden.

Die Prüfvorrichtung 100 hat einen um eine Rotierkopfachse 112 drehbaren Rotierkopf, an dem im Beispielsfall zwei an beweglichen Sondenhaltemitteln angeordnete Streufluss-Prüfsonden 110A, 110B diametral gegenüberliegend so angeordnet sind, dass sie bei Drehung des Rotierkopfes um seine Achse 112 auf kreisförmigen Umlaufbahnen um den im Wesentlichen parallel zur Rotierkopfachse 112 durch den Rotierkopf hindurchbewegten Prüfling 150 rotieren. Der Rotierkopf kann sich je nach Geräteausführung beispielsweise mit Drehzahlen zwischen ca. 100 min⁻¹ und 3000 min⁻¹ drehen. Das Prüfgut wird normalerweise gleichzeitig mit Geschwindigkeiten von bis zu 3m/s durch den Prüfkopf hindurch transportiert. Bei der Rotierbewegung schleifen die Prüfsonden 110A, 110B auf der im Wesentlichen zylindrischen Oberfläche 151 des Prüflings und tasten diese dabei auf schraubenförmigen Bahnen lückenlos ab.

Die Prüfvorrichtung hat eine Magnetisierungseinrichtung zur Magnetisierung von oberflächennahen Prüfvolumina des Prüflings 150. Zu der Magnetisierungseinrichtung gehören zwei diametral gegenüberliegend am Rotierkopf angebrachte, im Wesentlichen U-förmige Magnetisierungsjoche 120A, 120B, deren freie Enden als Polschuhe dienen und in geringem radialen Abstand zur Prüflingsoberfläche im Wesentlichen radial zur Prüflingsoberfläche ausgerichtet und etwa symmetrisch beidseits der jeweils zugeordneten Prüfsonde 110A, 110B angeordnet sind. Auf jedem der Joche 120A, 120B sind zwei gesonderte Spulenanordnungen aufgewickelt, nämlich eine an eine Gleichspannungsquelle 130A, 130B angeschlossene Gleichfeld-Spulenanordnung 135A, 135B und eine an eine Wechselspannungsquelle 140A, 140B angeschlossenen Wechselfeld-Spulenanordnung 145A, 145B. Bei den Wechselspannungsquellen 140A, 140B kann es sich um voneinander getrennte Wechselspannungsquellen oder um ein und dieselbe Wechselspannungsquelle handeln, ebenso können die Gleichspannungsquellen 130A, 130B durch gesonderte Spannungsquellen oder eine gemeinsame Gleichspannungsquelle gebildet sein.

Die Wechselspannungsquelle ist in der Lage, Wechselspannungen im Bereich von ca. 3 kHz bis ca. 12 kHz bei Stromstärken von bis zu mehreren Ampere, z.B. bis zu 20 Ampere oder mehr, zu erzeugen, wobei die gewünschte Frequenz und die gewünschte Stromstärke innerhalb dieser Bereiche stufenlos einstellbar sind.

Wird im Betrieb der Prüfvorrichtung ein Strom durch eine Magnetisierungs-Spulenanordnung geschickt, so entsteht in der Spulenanordnung eine magnetische Spannung, die gleich dem Produkt aus dem Strom und der Windungszahl der Spulenanordnung ist. Diese magnetische Spannung treibt einen Induktionsfluss durch das Joch und über den zwischen den Polschuhen und der Prüflingsoberfläche gebildeten Luftspalt auch in oberflächennahe Volumenbereiche des Prüflings. Von den geschlossenen magnetischen Kreisen im Bereich der Magnetisierungsjoche sind in Fig. 1 schematisch die von den Polschuhen zur Prüflingsoberfläche führenden magnetischen Feldlinien sowie durch Schraffierung die aufmagnetisierten, oberflächennahen Volumenbereiche des Prüflings gezeigt.

Im defektfreien Material verteilt sich der im Prüfvolumen erzeugte magnetische Fluss räumlich im Wesentlichen homogen, wie es beispielhaft im defektfreien Bereich nähe der unteren Streuflusssonde 110B gezeigt ist. Hier dringt kaum Streufluss aus dem Prüfling heraus. Dagegen wirken Risse oder andere Defekte im Material als Bereiche erhöhten magnetischen Widerstandes, so dass Feldanteile in der Nähe eines Defektes um den Defekt herumgeleitet und im oberflächennahen Bereich auch aus dem Material herausgedrängt werden können. Fig. 1 zeigt hierzu beispielhaft, dass der Prüfling 150 im Bereich der oberen Streuflusssonde 110A einen Außenfehler 152 in Form eines bis zur Oberfläche reichenden Risses 152 aufweist. Im Bereich des Risses werden magnetische Feldanteile als Streufluss 155 aus dem Material herausgedrängt und können mit der oberflächennah angeordneten, relativ zur Oberfläche 151 bewegten passiven Prüfsonde 110A detektiert und in elektrische Signale umgewandelt werden. Da das Messprinzip an sich bekannt ist, wird hier auf weitere Erläuterungen verzichtet.

Eine Besonderheit der Prüfeinrichtung 100 besteht darin, dass die Magnetisierungseinrichtung eine Gleichfeld-Magnetisierungseinheit zur Erzeugung eines magnetischen Gleichfeldes im Prüfvolumen und außerdem eine gleichzeitig aktivierbare Wechselfeld-Magnetisierungseinheit zur Erzeugung eines dem Gleichfeld im Prüfvolumen überlagerten magnetischen Wechselfeldes umfasst. Zur Gleichfeld-Magnetisierungseinheit gehören die Gleichspannungsquellen 130A, 130B und die jeweils daran angeschlossenen Gleichfeld-Spulenanordnungen 135A, 135B, während die Wechselfeld-Magnetisierungseinheit die Wechselspannungsquellen 140A, 140B mit den jeweils daran angeschlossenen Wechselfeld-Spulenanordnungen 145A, 145B umfasst. Da eine Gleichfeld-Spulenanordnung und eine Wechselfeld-Spulenanordnung jeweils auf einem gemeinsamen Jochkern aufgewickelt sind, haben die zum Wechselfeld gehörenden Induktionsflusslinien und die zum Gleichfeld gehörenden Induktionsflusslinien im Wesentlichen die gleiche Ausrichtung, d.h. sie laufen im Wesentlichen parallel zueinander durch das Joch und den Prüfling. Der magnetische Fluss wird im Wesentlichen senkrecht zur Prüflingsoberfläche bzw. im Wesentlichen senkrecht zur Längsrichtung des Prüflings eingekoppelt. Die Induktionsflusslinien verlaufen dabei insbesondere auch parallel zueinander durch das jeweils im Erfassungsbereich der Prüfsonde liegende Prüfvolumen. Im Prüfling verläuft der Induktionsfluss weitgehend in Umfangsrichtung, wodurch diese Anordnung besonders gut zur Erfassung von Längsfehlern geeignet ist, d.h. solchen Defekten, die parallel oder in relativ kleinen Winkeln zur Axialrichtung des Prüflings verlaufen.

Bei der Prüfung wird die Prüfvorrichtung 100 mindestens zeitweise so betrieben, dass sowohl die Gleichspannungsquellen als auch die Wechselspannungsquellen an die jeweiligen Spulenanordnungen angeschlossen und aktiviert sind, so dass das Prüfvolumen gleichzeitig mittels eines magnetischen Gleichfeldes und mittels eines dem Gleichfeld überlagerten magnetischen Wechselfeldes magnetisiert wird.

Das magnetische Wechselfeld, welches z.B. eine Wechselfeldfrequenz von ca. 6 kHz bis 8 kH haben kann, dringt aufgrund des Skin-Effekts nur bis zu einer relativ geringen Eindringtiefe in das elektrisch leitende Prüflingsmaterial ein. Auch für das magnetische Gleichfeld ergibt sich eine Konzentration der magnetischen Flusslinien im oberflächennahen Bereich des Prüflings, wie es in Fig. 1 schematisch durch die schraffierten oberflächennahen Bereiche angedeutet ist. Dieses Herausdrängen des magnetischen Gleichfeldes (bzw. des dazugehörigen Induktionsflusses) aus dem Prüflingsmaterial ergibt sich dadurch, dass die Gleichfeld-Magnetisierungsmittel mit hoher Relativgeschwindigkeitskomponente in Umfangsrichtung um den Prüfling herum rotieren, so dass die oberflächennahen Volumenbereiche des Prüflings auch im Hinblick auf das magnetische Gleichfeld ständig wechselnden Magnetfeldstärken ausgesetzt sind, die jedoch im Gegensatz zum magnetischen Wechselfeld die Polarität nicht ändern. Die Änderungsgeschwindigkeit der Gleichfeldmagnetisierung ist dabei in erster Linie von der Drehzahl der Rotation bestimmt. Durch das sich ständig in seiner Stärke ändernde Gleichfeld werden im Prüfling Wirbelströme induziert, die einem Eindringen des Gleichfeldes in größere Tiefen des Prüflingsmaterials entgegenwirken. Es ergibt sich somit eine Gleichfeldkonzentration (Konzentration des magnetischen Induktionsflusses des Gleichfeldes) in der Nähe der Oberfläche in demjenigen Bereich, der im Detektionsbereich der Prüfsonde liegt und der auch durch das höherfrequente Wechselfeld beeinflusst wird und sich somit in diesem oberflächennahen Bereich mit dem Wechselfeld überlagert.

In vielen Fällen hat es sich als günstig herausgestellt, wenn das Prüfvolumen nicht vollständig bis zu seiner materialspezifischen Sättigungsgrenze magnetisiert wird, sondern nur so weit, dass die Induktionsflussdichte innerhalb des Prüfvolumens unterhalb der Sättigungsgrenze bleibt. Dadurch ergeben sich in den Bereichen von Defekten 152 relativ große Unterschiede der relativen Permeabilität µᵣ zwischen dem Bereich des Defektes 152 und dem umgebenden Material, so dass sich eine relativ starke Feldverdrängung und damit eine gute Detektierbarkeit des Defektes oder der Defekte ergibt. Häufig können gute Ergebnisse erzielt werden, wenn die magnetische Feldstärke H_{DC} des Gleichfeldes so eingestellt wird, dass sie zwischen ca. 70% und ca. 90% der Sättigungsfeldstärke des Prüflingsmaterials liegt. Bei dieser Dosierung des Gleichfeldes bleibt der Streufeldmechanismus für das Wechselfeld noch weitestgehend erhalten. Das optimale Verhältnis zwischen der Feldstärke des Gleichfeldes und der Feldstärke des Wechselfeldes kann von Prüfteil zu Prüfteil bzw. von Material zu Material variieren und wird in der Regel in geeigneten Prüfläufen festgestellt. Um eine variable Einstellung an der Prüfvorrichtung zu ermöglichen, sind die Gleichspannungsquelle(n) und die Wechselspannungsquelle(n) unabhängig voneinander stufenlos einstellbar.

Fig. 2 zeigt eine schematische Ansicht einer statischen Streufluss-Prüfvorrichtung 200 zur Prüfung von rotierenden Prüflingen, wobei der Prüfling 250 ein aus ferromagnetischem Metall bestehendes Rohr ist, welches sich um seine Rohrachse dreht. Prüflinge aus Vollmaterial sind ebenfalls möglich. Die Magnetisierungseinrichtung zur Magnetisierung des Prüflings umfasst ein ortsfest angebrachtes, im Wesentlichen U-förmiges Magnetisierungsjoch 220, dessen dem Prüfling zugewandte Enden entsprechend der zylindrischen Außenfläche des Prüflings konkavzylindrisch geformt sind, so dass sich zwischen den durch die Enden gebildeten Polschuhen und der Prüflingsoberfläche ein schmaler Luftspalt mit im Wesentlichen gleichmäßiger Dicke befindet. Zur elektromagnetischen Erzeugung des Magnetisierungsfeldes ist eine einzige kombinierte AC/DC-Spulenanordnung 235 vorgesehen, die zwei in Reihe geschaltete Windungspakete 235A, 235B umfasst, die jeweils in der Nähe der Polschuhe auf das Magnetisierungsjoch 220 aufgewickelt sind. Die Spulenanordnung 235 ist an eine kombinierte Gleichspannungs- und Wechselspannungsquelle 230 angeschlossen, die dafür eingerichtet ist, die Spulenanordnung mit einem Gleichstrom I_{DC} und einem dem Gleichstrom überlagerten Wechselstrom I_{AC} zu erregen.

Zwischen den Polschuhen des Magnetisierungsjochs ist eine in Radialrichtung des Prüflings beweglich gelagerte und mittels Federkraft an die Prüflingsoberfläche andrückbare Prüfsonde 210 angebracht, bei der es sich insbesondere um eine Hall-Sonde, eine induktive Sonde oder um eine GMR-Sonde handeln kann. Die schematisch dargestellten magnetischen Induktionsflusslinien verlaufen im oberflächennahen Bereich des Prüflings im Wesentlichen parallel zur Oberfläche, so dass radial oder schräg zur Radialrichtung im Prüfvolumen angeordnete Risse als magnetische Widerstände fungieren, die einen durch die Prüfsonde 210 detektierbaren Streufluss verursachen. Auch bei diesem Ausführungsbeispiel laufen die durch das Gleichfeld erzeugten Induktionsflusslinien und die durch gleichzeitig wirksame Wechselfeld erzeugten Induktionsflusslinien in gleicher Richtung, da sie durch ein und dieselbe Spulenanordnung und das gleiche Magnetisierungsjoch erzeugt werden.

In Fig. 2 ist durch die im Prüfling 250 verlaufenden Feldlinien angedeutet, dass auch bei dieser Variante die gleichsinnig (parallel zueinander) verlaufenden magnetischen Flusslinien des Gleichfeldes und des Wechselfeldes sich im oberflächennahen Bereich des Prüflings, d.h. in dem den Magnetisierungsmitteln zugewandten Bereich, konzentrieren und nicht sehr weit an das Innere eindringen. Wie bei der oben beschriebenen Ausführungsform ist dies für den Wechselfeld-Anteil verständlich. Dass auch der Gleichfeld-Anteil im oberflächennahen Bereich konzentriert bleibt, liegt im Wesentlichen an der (auch) in Umfangsrichtung des Prüflings verlaufenden Relativbewegung zwischen Prüfling und dem auf ihn einwirkenden magnetischen Gleichfeld. Die in Umfangsrichtung des Prüflings und damit auch in Richtung der zwischen den Polen des Magnetisierungsjochs 220 verlaufende Relativgeschwindigkeitskomponente sollte mehr als 0,3 m/s, insbesondere mehr als 1 m/s betragen, um eine wirksame Gleichfeldkonzentration im Bereich der Oberfläche zu erzielen.

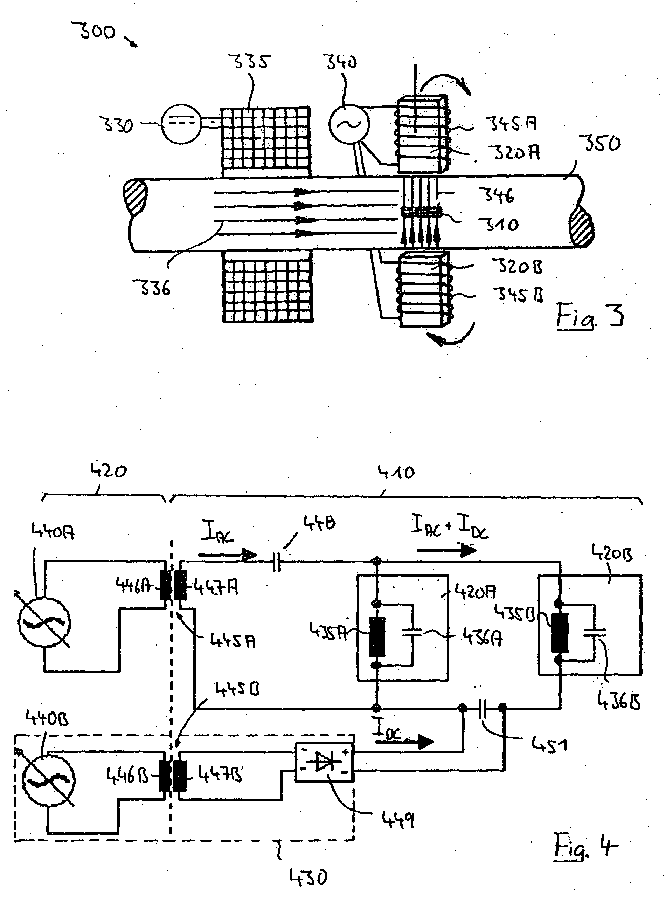

In Fig. 3 sind wesentliche Teile einer Streufluss-Prüfvorrichtung 300 zur Durchlaufprüfung von Rundmaterial gemäß einem nicht zur beanspruchten Erfindung gehörenden Beispiel gezeigt. Die Prüfvorrichtung hat einen vom Prüfling 350 durchlaufenden Rotierkopf, an dem an diametral gegenüberliegenden Positionen Magnetisierungsjoche 320A, 320B mit einander zugewandten Enden angebracht sind, die jeweils AC-Spulenanordnungen 345A, 345B tragen, welche in Reihe geschaltet und an eine gemeinsame Wechselspannungsquelle 340 angeschlossen sind. Der Rotierkopf trägt außerdem mehrere Streufluss-Prüfsonden 310, die um 90° winkelversetzt zu den an dem Magnetisierungsjoch gebildeten Polen angeordnet sind. An einem ortsfesten Bauteil der Prüfvorrichtung 300 ist axial versetzt zum Rotierkopf koaxial zu diesem eine Ringspulenanordnung 335 angeordnet, die an eine Gleichspannungsquelle 330 angeschlossen ist. Bei diesem rotierenden Prüfsystem mit statischer DC-Magnetisierung und rotierender AC-Magnetisierung liegt somit eine räumliche Trennung der Gleichfeld-Magnetisierungseinheit und der Wechselfeld-Magnetisierungseinheit vor. Der konstruktive Aufwand und damit verbundene Kosten können hierdurch besonders gering gehalten werden. Da die zentrische Spulenachse der DC-Spulenanordnung 335 koaxial zum Rotierkopf ausgerichtet ist und der Prüfling 350 im Wesentlichen koaxial zu dieser gemeinsamen Achse durch die Prüfvorrichtung hindurchgeführt wird, erzeugt die Gleichfeld-Spulenanordnung 335 bei aktivierter Gleichspannungsquelle ein magnetisches Gleichfeld, dessen Flusslinien 336 zumindest in der Nähe der Gleichfeld-Spulenanordnung 335 im Wesentlichen parallel zur Längsachse des Prüflings verlaufen. Demgegenüber laufen die durch die Wechselfeld-Spulenanordnungen 320A, 320B erzeugten Induktionsflusslinien 346 des magnetischen Wechselfeldes im Wesentlichen in einer Ebene senkrecht zur Längsachse des Prüflings und damit auch im Wesentlichen senkrecht zu den Induktionsflusslinien des magnetischen Gleichfeldes.

In Fig. 4 ist eine Ausführungsform einer Schaltungsanordnung für eine Magnetisierungseinrichtung einer Streufluss-Prüfvorrichtung mit kombinierter Gleichfeld-Wechselfeld-Magnetisierung gezeigt. Die Magnetisierungseinrichtung hat zwei identisch aufgebaute Magnetisierungsjoche 420A, 420B, wobei auf jedes der Joche eine AC/DC-Spulenanordnung 435A bzw. 435B zur Erzeugung des Magnetisierungsfeldes aufgewickelt ist. Parallel zu den Induktivitäten der Spulenanordnungen 435A, 435B sind jeweils Kapazitäten (symbolisiert durch Kondensatoren 436A, 436B) geschaltet, so dass die Spulenanordnungen 435A, 435B jeweils in einen Schwingkreis eingebunden sind. Die Magnetisierungsjoche sind, ähnlich wie bei der Ausführungsform in Fig. 1, an einem Rotierkopf 410 angebracht, der gegenüber einem statischen Teil 420 der Prüfvorrichtung um eine Rotierkopfachse drehbar ist.

Zur elektrischen Stromversorgung der Magnetisierungseinrichtung sind zwei unabhängig voneinander stufenlos einstellbare Wechselspannungsquellen 440A, 440B im stationären Teil 420 der Prüfvorrichtung untergebracht. Die elektrische Verbindung zwischen den Wechselspannungsquellen im stationären Teil 420 und den elektrischen Bauteilen des Rotierkopfs 410 wird über induktive Rotierübertrager 445A, 445B erreicht. Dabei ist die erste Wechselspannungsquelle 440A an die Primärwicklung 446A des ersten Rotierübertragers 445A, und die zweite Wechselspannungsquelle 440B an die primärseitige Wicklung 446B des zweiten Rotierübertragers 445B angeschlossen. Die sekundärseitige Wicklung 447A des ersten Rotierübertragers 445A ist an einer Seite über einen Kondensator 448 jeweils an eine Seite der bezüglich der Wechselspannung parallel geschalteten Spulenanordnung 435A, 435B angeschlossen. Der andere Anschluss der Sekundärwicklung 447A ist jeweils mit dem gegenüberliegenden Anschluss der Spulenanordnung 435A bzw. 435B elektrisch verbunden.

Die zweite Wechselspannungsquelle 440B ist über einen zweiten Rotierübertrager 445B mit primärseitiger Wicklung 446B und sekundärseitiger Wicklung 447B an die rotierenden Teile der elektrischen Anordnung angeschlossen. Die Enden der Sekundärwicklung 447B sind jeweils an die Eingänge eines Gleichrichters 449 angeschlossen, dessen Ausgänge somit die Ausgänge einer Gleichspannungsquelle 430 bilden, welche die zweite Wechselspannungsquelle 440B, den zweiten Rotierübertrager 445B und den Gleichrichter 449 umfasst. Vom "+"-Ausgang der Gleichspannungsquelle 430 führt ein Gleichstromkreis durch die Spulenanordnung 435A des ersten Jochs 420A, die hierzu bezüglich Gleichstrom in Reihe geschaltete Spulenanordnung 435B des zweiten Magnetisierungsjochs 420B zum "-"-Ausgang der Gleichspannungsquelle 430. Ein zwischen die Ausgänge der Gleichspannungsquelle geschalteter Kondensator 451 sorgt dafür, dass die AC/DC-Spulenanordnungen 435A, 435B bezüglich des Gleichstroms in Reihe und bezüglich des Wechselstroms parallel zueinander geschaltet sind.

Bei gleichzeitiger Aktivierung der ersten und der zweiten Wechselspannungsquellen 440A, 440B verläuft durch die beiden Spulenanordnungen 435A, 435B ein Gleichstrom I_{DC}, dem ein Wechselstrom I_{AC} überlagert ist. Dabei wird der Gleichstromanteil I_{DC} von der Gleichstromquelle 430 bereitgestellt, während der Wechselstromanteil I_{AC} über den ersten Rotierübertrager 445A direkt von der ersten Wechselspannungsquelle 440A bereitgestellt wird. Durch Einstellung des Leistungsverhältnisses zwischen den Wechselspannungsquellen 440A, 440B kann das Verhältnis der Stromstärken zwischen Wechselstrom und Gleichstrom und somit auch das Verhältnis der Magnetisierungsfeldstärken von elektrischem Gleichfeld und elektrischem Wechselfeld stufenlos eingestellt werden. Die Schwingkreise mit den Spulenanordnungen 435A bzw. 435B sind jeweils als resonante Schwingkreise abgestimmt, so dass nur Verluststrom zugeführt werden muss.

Selbstverständlich können die Wechselspannungsquellen 440A, 440B auch wechselweise aktiviert werden, so dass die Magnetisierungseinrichtung auch als reine Gleichfeld-Magnetisierungseinrichtung oder als reine Wechselfeld-Magnetisierungseinrichtung betrieben werden kann.

Im Folgenden werden anhand einiger Beispiele wesentliche Vorteile der kombinierten Gleichfeld/Wechselfeld-Magnetisierung erläutert. Wie eingangs erwähnt, hat eine Prüfeinrichtung mit kombinierter AC- und DC-Magnetisierung gegenüber einer reinen Wechselfeld-Magnetisierung eine wesentlich größere Eindringtiefe am Prüfmaterial. Dadurch kann erreicht werden, dass sehr tiefe Materialfehler, wie z.B. Spannungsrisse, die an der Oberfläche nicht offen sind, oder Fehler, die durch den Fertigungsprozess zugewalzt wurden, mit einer Signalamplitude zur Anzeige kommen, die derjenigen eines zur Oberfläche offenen Fehlers vergleichbar ist. Außerdem wurde beobachtet, dass durch das zusätzlich zum Wechselfeld wirksame Gleichfeld eine Homogenisierung der Prüfteile im Hinblick auf Permeabilitätsinhömogenitäten und die Wirkung von lokalen Kaltverformungen auftreten kann. Dadurch kann je nach Werkstoffzusammensetzung und Art des Herstellungsverfahrens eine Verringerung des Störuntergrundes erzielt werden. Diese Vorteile werden anhand der folgenden Prüfergebnisse ersichtlich.

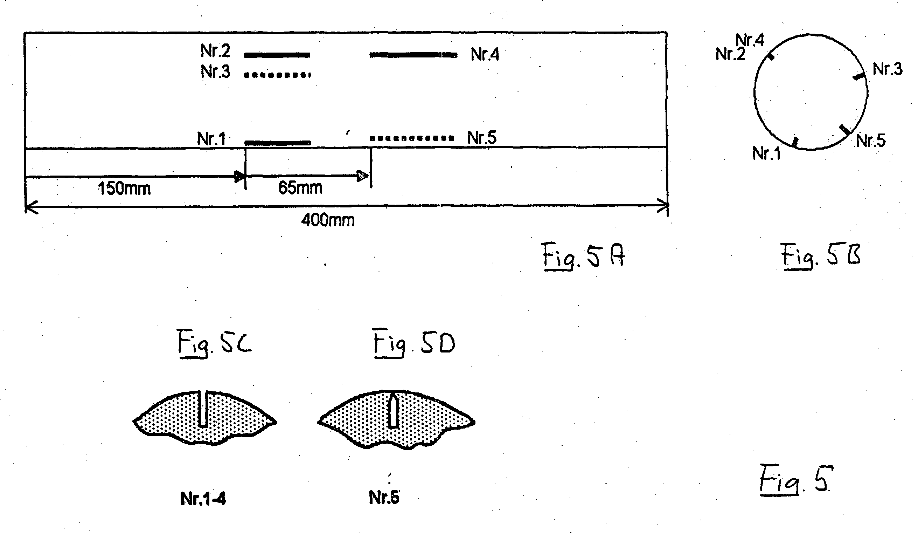

Zur Überprüfung der Auswirkungen einer gleichzeitigen AC/DC-Magnetisierung auf die Qualität der Fehlersignale wurde ein anhand von Fig. 5 erläutertes Versuchs-Prüfteil hergestellt. Das Prüfteil aus kaltgezogenem Stahlwerkstoff hatte einen kreiszylindrischen Querschnitt (Fig. 5B) mit einem Durchmesser von 40 mm und eine Länge 400 mm. Am Umfang des Prüfteils wurden insgesamt fünf Längsfehler (Fehlerausrichtung parallel zur Längsachse des Prüfteils) in der aus Fig. 5A ersichtlichen Weise durch Sägeschnitte eingebracht. Die Charakteristika aller Fehler sind nachfolgender Tabelle A zu entnehmen:

**Tabelle A**

| **Fehlergröße** | | | | **Richtung** | **Herstellung** |
|---|---|---|---|---|---|
| **Nr.** | **Tiefe [mm]** | **Breite [mm]** | **Länge [mm]** | **längs** | **gesägt** |
| 1 | 0,1 | 0,2 | 50 | X | X |
| 2 | 0,3 | 0,2 | 50 | X | X |
| 3 | 1,0 | 0,2 | 50 | X | X |
| 4 | 8,1 | 0,2 | 60 | X | X |
| 5 | 8,1 | 0,2 | 60 | X | X zugewalzt |

Die Fehler hatten jeweils gleiche Breite (0,2 mm) und teilweise unterschiedliche Tiefen und Längen, wobei die Fehler Nr. 1 bis 4 gemäß Fig. 5C als offene Fehler zur Oberfläche des Prüflings offen waren, während Fehler Nr. 5 als überwalzter Sägeschnitt ausgeführt war, also als verborgener Fehler, dessen luftgefüllte Störzonen nicht ganz bis zur Oberfläche heran reicht, weil nach der Erzeugung der Kerbe ein Walzschritt angeschlossen wurde, der zu einem oberflächlichen Verschluss des Sägeschnitts führte. Der verborgene Fehler Nr. 5 hat ansonsten die gleichen Dimensionen wie der offene Fehler Nr. 4. Das Prüfteil wurde mit einer Geschwindigkeit von ca. 0,2 m/sec durch eine statische, kombinierte AC/DC-Streufluss-Prüfvorrichtung geführt und dabei um seine Längsachse gedreht, z.B. mit Drehgeschwindigkeiten zwischen 300 Umin⁻¹ und 2400 Umin⁻¹. Die Wechselspannungsquelle war auf eine Frequenz von 7.5 kHz eingestellt, was im Bereich der für AC-Streufluss-Messungen typischen Frequenzen (ca. 3kHz bis ca. 12 kHz) liegt. Über die Gleichspannungs- und Wechselspannungsquellen wurde ein Gleichstrom von I_{DC} ≈ 20 A und ein Erregungsstromverhältnis I_{DC}/I_{AC} zwischen der Stromstärke I_{DC} des Gleichstroms und der Stromstärke I_{AC} des Wechselstroms von ca. 4:1 eingestellt. Es wurde eine kombinierte Gleichfeld-Wechselfeld-Spulenanordnung verwendet, so dass sich im Prüfmaterial ein entsprechendes Feldstärkeverhältnis H_{DC}/H_{AC} ≈ 4:1 ergab.

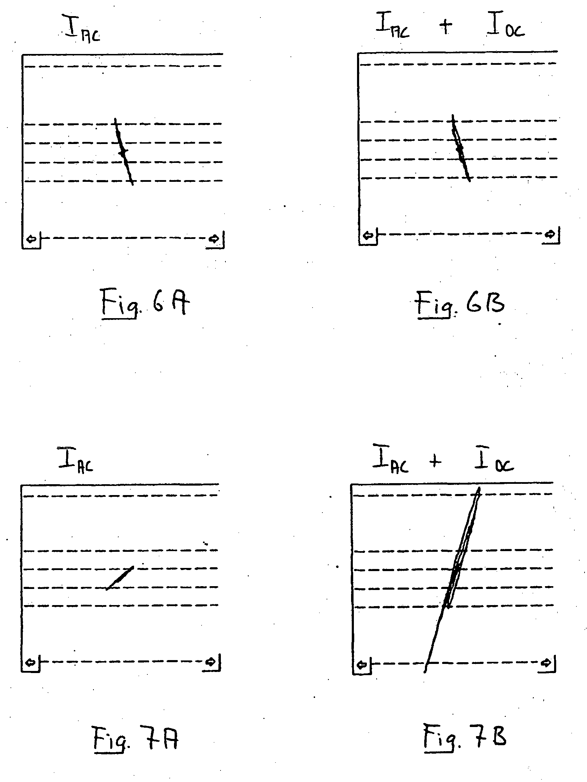

Die Fig. 6 und 7 zeigen jeweils Darstellungen der durch die Fehler erzeugten Fehleramplituden in der Impedanzebene. Dabei repräsentiert die Länge des langgestreckten Signals die Fehleramplitude, während die Ausrichtung des Signals in der Impedanzebene die relative Phase der Fehleramplitude in Bezug auf eine Referenzlage repräsentiert. Fig. 6 zeigt die Resultate für Fehler Nr. 2 (offener Fehler, 0,3 mm tief, 0,2 mm breit), während Fig. 7 die Resultate für Fehler Nr. 5 zeigt (verborgener Fehler, 8,1 mm tief, 0,2 mm breit, zugewalzt, vgl. Fig. 5D). Die jeweils linken Figuren 6A, Fig. 7A zeigen jeweils das Signal bei reiner Wechselfeld-Magnetisierung mit I_{AC} ≈ 5A und I_{DC} = 0A. Die jeweils rechten Figuren 6B, 7B zeigen die Signale bei kombinierter Gleichfeld-Wechselfeld-Magnetisierung, wobei dem unveränderten Wechselfeld (I_{AC} ≈ 5A) ein magnetisches Gleichfeld überlagert war, welches mit Gleichstrom von I_{DC} ≈ 20 A erzeugt wurde.

Der Vergleich der Signale in Figuren 6A und 6B zeigt, dass der relativ kleine offene Fehler bei der kombinierten Gleichfeld/Wechselfeld-Magnetisierung (Fig. 6B) im Wesentlichen die gleiche Fehleramplitude und Phasenlage hat wie bei der reinen Wechselfeldanregung (Fig. 6A). Die zusätzliche Gleichfeldmagnetisierung führt also nicht zu einer Verschlechterung der Empfindlichkeit des Verfahrens mit Wechselfeld-Magnetisierung. Deutliche Unterschiede ergeben sich dagegen bei dem zur Oberfläche geschlossenen verborgenen Fehler Nr. 5. Während die Prüfung mit reiner Wechselfeld-Anregung (Fig. 7A) ein relativ kleines Fehlersignal zeigt, dessen zuverlässige Auswertung eine sorgfältige Trennung des eigentlichen Fehlersignals vom Störuntergrund erfordert, bringt die kombinierte Gleichfeld/Wechselfeld-Magnetisierung (Fig. 7B) ein deutliches Fehlersignal mit mehrfach größerer Fehleramplitude. Es zeigt sich somit, dass die kombinierte Gleichfeld-Wechselfeld-Magnetisierung gerade bei nicht bis zur Oberfläche reichenden offenen Fehlern erhebliche Vorteile gegenüber der reinen Wechselfeldmagnetisierung bringt. Im Übrigen zeigt der Vergleich der Fehleramplituden des relativ tiefen Fehlers Nr. 5 in Fig. 7B und des demgegenüber flacheren Fehlers Nr. 2 in Fig. 6B, dass die Fehleramplitude stark von der Fehlertiefe abhängt.

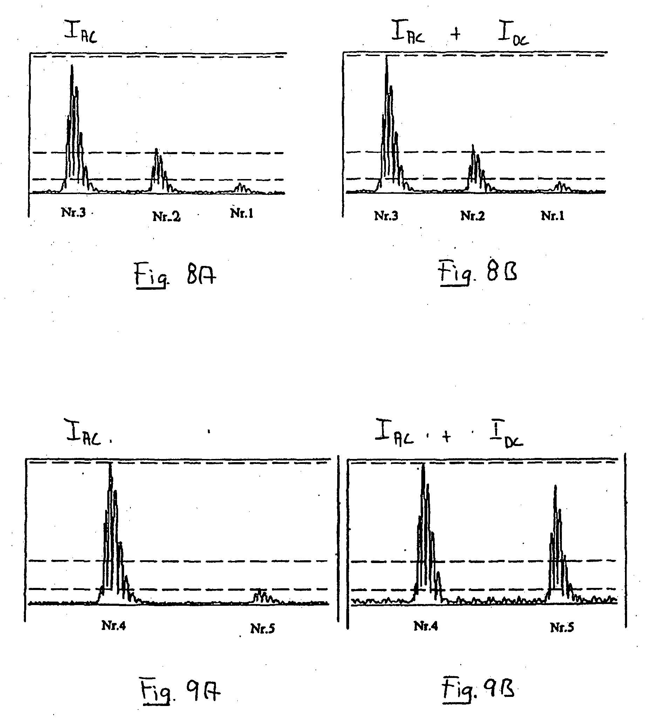

Die Fig. 8 und 9 zeigen umfangsbezogene Darstellungen der Fehleramplituden, wobei die linken Teilfiguren 8A, 9A jeweils die Ergebnisse der reinen Wechselfeld-Magnetisierung und die rechten Teilfiguren 8B, 9B jeweils die Ergebnisse für die kombinierte Gleichfeld/Wechselfeld-Magnetisierung zeigen. Die Darstellungen in Fig. 9 resultieren aus einer Erfassung mit reduzierter Empfindlichkeit im Vergleich zu den Darstellungen der Fig. 8, sind jedoch untereinander direkt vergleichbar. Aus den Darstellungen der Fig. 8 ergibt sich, dass die kombinierte AC/DC-Magnetisierung im Vergleich zur reinen Wechselfeldmagnetisierung bei zur Oberfläche offenen Fehlern praktisch identische Fehleramplituden bringt, so dass keine Einbußen an Auflösungsvermögen zu befürchten sind. Der Vergleich der Fehler Nr. 4 (offener Fehler) und Nr. 5 (zugewalzter, verborgener Fehler) in Fig. 9 zeigt dagegen, dass die kombinierte Gleichfeld/Wechselfeld-Magnetisierung (Fig. 9B) für den zugewalzten Fehler Nr. 5 eine erheblich größere Fehleramplitude erbringt als die reine Wechselfeld-Magnetisierung (Fig. 9A). Das Fehlersignal hebt sich deutlich vom Störuntergrund ab, woraus ersichtlich wird, dass die kombinierte Gleichfeld/Wechselfeld-Magnetisierung besonders bei der Detektion von verborgenen Fehlern gegenüber der reinen Wechselfeld-Magnetisierung erhebliche Vorteile bringt, ohne dass sich bei den zur Oberfläche offenen Fehlern Nachteile ergeben.

Die Erfindung ist bei unterschiedlichsten Prüflingstypen einsetzbar, beispielsweise bei rohrförmigen Prüflingen genauso wie bei Prüflingen aus Vollmaterial. Ein Prüfling kann einen kreisrunden Querschnitt haben, wodurch eine relative Rotation von Prüfling und Prüfsonde besonders einfach möglich wird, welche durch Rotation des Prüflings, durch Rotation des die Sonde(n) enthaltenen Teils der Prüfvorrichtung und/oder durch eine Kombination dieser Rotationen herbeigeführt werden kann. Auch Prüflinge mit unrundem Querschnitt, beispielsweise Dreikantknüppel oder Vierkantknüppel oder Knüppel mit anderen polygonalen Querschnitten, sowie Prüflinge mit elliptischem Querschnitt, können geprüft werden, wobei dann ggf. bei nicht zur beanspruchten Erfindung gehörenden Beispielen die Relativbewegung zwischen Prüfling und Prüfsonde im Wesentlichen durch die Bewegung des Prüflings relativ zu einer statischen Prüfvorrichtung herbeigeführt werden kann.

## Patentansprüche

1. Verfahren zum Detektieren von oberflächennahen Defekten in einem mindestens teilweise aus ferromagnetischem Material bestehenden Prüflings (150, 250, 350), bei dem ein Prüfvolumen des Prüflings magnetisiert und zur Erfassung von durch Defekte verursachten magnetischen Streufeldern abgetastet wird, wobei das Prüfvolumen mittels eines magnetischen Gleichfeldes und gleichzeitig mittels eines dem Gleichfeld überlagerten magnetischen Wechselfeldes magnetisiert wird, **dadurch gekennzeichnet, dass** ein magnetisches Wechselfeld mit einer Wechselfeldfrequenz von mindestens 1 kHz erzeugt wird und dass eine Relativbewegung zwischen dem Prüfling und dem auf den Prüfling wirkenden magnetischen Gleichfeld und dem dem Gleichfeld überlagerten Wechselfeld erzeugt wird, welche eine Relativgeschwindigkeitskomponente hat, die im Wesentlichen in Richtung der magnetischen Feldlinien des Gleichfeldes innerhalb des Prüflings gerichtet ist, wobei diese Komponente der Relativgeschwindigkeit mindestens 0,3 m/s beträgt, wobei das Gleichfeld und das Wechselfeld in das Prüfvolumen derart eingekoppelt werden, dass der durch das Gleichfeld erzeugte Induktionsfluss und der durch das Wechselfeld erzeugte Induktionsfluss im Wesentlichen die gleiche Ausrichtung haben, wobei das magnetische Gleichfeld so in den Prüfling eingekoppelt wird, dass Feldlinien des magnetischen Gleichfeldes innerhalb des Prüflings abschnittsweise etwa in Umfangsrichtung und/oder im Wesentlichen senkrecht zu einer Längsachse des Prüflings verlaufen, wobei die Relativbewegung durch eine relative Rotation zwischen dem Prüfling (150, 250) und einer Gleichfeld-Magnetisierungseinheit erreicht wird.

2. Verfahren nach Anspruch 1, worin die in Richtung der Feldlinien des Gleichfeldes gemessene Komponente der Relativgeschwindigkeit im Bereich von 1 m/s bis 5 m/s liegt.

3. Verfahren nach einem der vorhergehenden Ansprüche, worin die Wechselfeldfrequenz zwischen 3 kHz und 12 kHz liegt.

4. Verfahren nach einem der vorhergehenden Ansprüche, worin die magnetische Feldstärke H_{DC} des Gleichfeldes im Prüfvolumen mindestens halb so groß, insbesondere mindestens genauso groß ist wie die magnetische Feldstärke H_{AC} des Wechselfeldes und/oder nicht mehr als das 20fache der magnetischen Feldstärke des Wechselfeldes beträgt, wobei vorzugsweise ein Feldstärkeverhältnis H_{DC}/H_{AC} zwischen der magnetischen Feldstärke H_{DC} des Gleichfeldes und der magnetischen Feldstärke H_{AC} des Wechselfeldes zwischen 1 und 5 liegt.

5. Verfahren nach einem der vorhergehenden Ansprüche, worin die magnetische Feldstärke H_{DC} des Gleichfeldes zwischen, ca. 10% und ca. 95% der Sättigungsfeldstärke des Prüflingsmaterials im Prüfvolumen beträgt, vorzugsweise zwischen ca. 70% und ca. 85% der Sättigungsfeldstärke und/oder worin eine Feldstärkensumme ΣH=H_{AC}+H_{DC} der magnetischen Feldstärke H_{DC} des Gleichfeldes und der magnetischen Feldstärke H_{AC} des Wechselfeldes zwischen ca. 10% und ca. 100% der Sättigungsfeldstärke des Prüflingsmaterials im Prüfvolumen beträgt, vorzugsweise zwischen ca. 70% und ca. 85% der Sättigungsfeldstärke.

6. Verfahren nach einem der vorhergehenden Ansprüche, worin die magnetischen Streufelder mit Hilfe mindestens einer magnetfeldempfindlichen Streuflusssonde erfasst werden und eine Auswertung von Sondensignalen der Streuflusssonde für die Auswertung von Streuflusssignalen ausgelegt ist, wobei insbesondere eine Amplitude des Sondensignals zur Charakterisierung von Defekten ausgewertet wird.

7. Vorrichtung zum Detektieren von oberflächennahen Defekten in einem mindestens teilweise aus ferromagnetischem Material bestehenden Prüfling (150, 250, 350), mit:
einer Magnetisierungseinrichtung zur Magnetisierung eines Prüfvolumens des Prüflings und
mindestens einer magnetfeldempfindlichen Prüfsonde (110A, 110B, 210, 310), zur Erfassung von durch Defekte verursachten magnetischen Streufeldern, wobei die Magnetisierungseinrichtung eine Gleichfeld-Magnetisierungseinheit zur Erzeugung eines magnetischen Gleichfeldes und eine Wechselfeld-Magnetisierungseinheit zur Erzeugung eines dem Gleichfeld im Prüfvolumen überlagerten magnetischen Wechselfeldes umfasst, **dadurch gekennzeichnet, dass** die Gleichfeld-Magnetisierungseinheit und die Wechselfeld-Magnetisierungseinheit so konfiguriert sind, dass das Gleichfeld und das Wechselfeld in das Prüfvolumen derart eingekoppelt werden, dass der durch das Gleichfeld erzeugte Induktionsfluss und der durch das Wechselfeld erzeugte Induktionsfluss im Wesentlichen die gleiche Ausrichtung haben, dass eine Wechselspannungsquelle der Wechselfeld-Magnetisierungseinrichtung dafür ausgelegt ist, Wechselspannung mit einer Frequenz von mindestens 1 kHz zu erzeugen und dass Einrichtungen zur Erzeugung einer Relativbewegung zwischen dem Prüfling (150, 250, 350) und dem auf den Prüfling wirkenden magnetischen Gleichfeld vorgesehen sind, wobei die Relativbewegung eine relative Rotation zwischen dem Prüfling und einer Gleichfeld-Magnetisierungseinheit umfasst und eine Relativgeschwindigkeitskomponente hat, die im Wesentlichen in Richtung der magnetischen Feldlinien des Gleichfeldes innerhalb des Prüflings gerichtet ist, wobei diese Komponente der Relativgeschwindigkeit mindestens 0,3 m/s beträgt, so dass die Vorrichtung zur Durchführung des Verfahrens nach einem der Ansprüche 1 bis 6 konfiguriert ist.

8. Vorrichtung nach Anspruch 7, worin die Magnetisierungseinrichtung mindestens eine Wechselfeld/Gleichfeld-Spulenanordnung (235, 435A, 435B) aufweist, die elektrisch gleichzeitig an eine Wechselspannungsquelle und an eine Gleichspannungsquelle angeschlossen oder abschließbar ist, oder worin die Magnetisierungseinrichtung mindestens eine an eine Wechselspannungsquelle (140A, 140B, 340) angeschlossene Wechselspannungs-Spulenanordnung (145A, 145B, 345A, 345B) und mindestens eine von der Wechselspannungs-Spulenanordnung gesonderte, an eine Gleichspannungsquelle (130A, 130B, 330) angeschlossene Gleichspannungs-Spulenanordnung (135A, 135B, 335) aufweist.

9. Vorrichtung nach einem der Ansprüche 7 oder 8, worin die Magnetisierungseinrichtung mindestens ein Magnetisierungsjoch (120A, 120B, 220) mit einem Jochkern aufweist, auf dem eine Wechselspannungs-Spulenanordnung und eine Gleichspannungs-Spulenanordnung gewickelt ist, wobei ein Magnetisierungsjoch vorzugsweise als ein im Wesentlichen U-förmiges Magnetisierungsjoch ausgebildet ist, dessen freie Enden als Polschuhe dienen und im Wesentlichen radial zur Prüflingsoberfläche ausgerichtet sind, wobei die Polschuhe insbesondere etwa symmetrisch beidseits einer zugeordneten Prüfsonde (110A, 110B, 210, 310) angeordnet sind.

10. Vorrichtung nach einem der Ansprüche 7 bis 9, worin die Gleichfeld-Magnetisierungseinheit eine Wechselspannungsquelle (440B) und einen an die Wechselspannungsquelle angeschlossenen Gleichrichter (449) umfasst, wobei vorzugsweise zwischen der Wechselspannungsquelle (440B) und dem Gleichrichter (449) ein berührungslos arbeitender induktiver Übertrager (445B) angeordnet ist.

11. Vorrichtung nach einem der Ansprüche 7 bis 10, worin eine Wechselspannungsquelle der Wechselfeld-Magnetisierungseinheit dafür ausgelegt ist, Wechselspannungen im Bereich von 3 kHz bis 12 kHz und/oder Stromstärken von bis zu mehreren Ampere, insbesondere bis zu 20 Ampere oder mehr, zu erzeugen.

12. Vorrichtung nach einem der Ansprüche 7 bis 11, **dadurch gekennzeichnet, dass** die Gleichfeld-Magnetisierungsmittel so an einem Rotierkopf angebracht sind, dass sie um den Prüfling (150) herumbewegbar sind.

13. Vorrichtung nach einem der Ansprüche 7 bis 12, **gekennzeichnet durch** eine Auswerteeinrichtung zur Verarbeitung von Sondensignalen der mindestens einen magnetfeldempfindlichen Prüfsonde (110A, 110B, 210, 310), wobei die Auswerteeinrichtung dafür eingerichtet ist, von der Prüfsonde erfasste inhomogenitäten des magnetischen Flusses auszuwerten und zu Fehlersignalen zu verarbeiten, wobei insbesondere eine Fehleramplitude des Fehlersignals zur Charakterisierung von Defekten ausgewertet wird.

## Claims

1. Method for detecting near-surface defects in a test sample (150, 250, 350) consisting at least partly of ferromagnetic material, wherein a test volume of the test sample is magnetized and scanned for the detection of magnetic leakage fields caused by defects, wherein the test volume is magnetized by means of a magnetic DC field and simultaneously by means of a magnetic AC field superposed on the DC field, **characterized in that**
a magnetic AC field is generated with an AC field frequency of at least 1 kHz, and
**in that** a relative movement is produced between the test sample and the magnetic DC field acting on the test sample and the AC field superposed on the DC field, which relative movement has a relative speed component directed substantially in the direction of the magnetic field lines of the DC field within the test sample, wherein this component of the relative speed is at least 0.3 m/s, wherein the DC field and the AC field are coupled into the test volume in such a way that the induced magnetic flux generated by the DC field and the induced magnetic flux generated by the AC field have substantially the same orientation, wherein the magnetic DC field is coupled into the test sample such that field lines of the magnetic DC field within the test sample extend in sections approximately in a circumferential direction and/or substantially perpendicularly to a longitudinal axis of the test sample, wherein the relative movement is achieved by means of a relative rotation between the test sample (150, 250) and a DC field magnetization unit.

2. Method according to claim 1, wherein the component of the relative speed that is measured in the direction of the field lines of the DC field is in the range of 1 m/s to 5 m/s.

3. Method according to either of the preceding claims, wherein the AC field frequency is between 3 kHz and 12 kHz.

4. Method according to any of the preceding claims, wherein the magnetic field strength H_{DC} of the DC field in the test volume has at least half the magnitude of, in particular at least the same magnitude as, the magnetic field strength H_{AC} of the AC field and/or is not more than 20 times the magnetic field strength of the AC field, wherein a field strength ratio H_{DC}/H_{AC} between the magnetic field strength H_{DC} of the DC field and the magnetic field strength H_{AC} of the AC field is preferably between 1 and 5.

5. Method according to any of the preceding claims, wherein the magnetic field strength H_{DC} of the DC field is between approximately 10% and approximately 95% of the saturation field strength of the test sample material in the test volume, preferably between approximately 70% and approximately 85% of the saturation field strength, and/or wherein a field strength sum ΣH=H_{AC}+H_{DC} of the magnetic field strength H_{DC} of the DC field and the magnetic field strength H_{AC} of the AC field is between approximately 10% and approximately 100% of the saturation field strength of the test sample material in the test volume, preferably between approximately 70% and approximately 85% of the saturation field strength.

6. Method according to any of the preceding claims, wherein the magnetic leakage fields are detected with the aid of at least one magnetic-field-sensitive leakage flux probe and an evaluation of probe signals of the leakage flux probe is designed for the evaluation of leakage flux signals, wherein, in particular, an amplitude of the probe signal is evaluated for characterizing defects.

7. Device for detecting near-surface defects in a test sample (150, 250, 350) consisting at least partly of ferromagnetic material, comprising:
a magnetization apparatus for magnetizing a test volume of the test sample, and
at least one magnetic-field-sensitive test probe (110A, 110B, 210, 310), for the detection of magnetic leakage fields caused by defects, wherein the magnetization apparatus comprises a DC field magnetization unit for generating a magnetic DC field and an AC field magnetization unit for generating a magnetic AC field superposed on the DC field in the test volume,
**characterized in that**
the DC field magnetization unit and the AC field magnetization unit are configured such that the DC field and the AC field are coupled into the test volume in such a way that the induced magnetic flux generated by the DC field and the induced magnetic flux generated by the AC field have substantially the same orientation,
**in that** an AC voltage source of the AC field magnetization unit is designed to generate AC voltage having a frequency of at least 1 kHz and
**in that** apparatuses for producing a relative movement between the test sample (150, 250, 350) and the magnetic DC field acting on the test sample are provided, wherein the relative movement comprises a relative rotation between the test sample and a DC field magnetization unit and has a relative speed component directed substantially in the direction of the magnetic field lines of the DC field within the test sample, wherein this component of the relative speed is at least 0.3 m/s, such that the device is configured to carry out the method according to any of claims 1 to 6.

8. Device according to claim 7, wherein the magnetization apparatus has at least one AC field/DC field coil arrangement (235, 435A, 435B) which is electrically connected or connectable simultaneously to an AC voltage source and to a DC voltage source, or wherein the magnetization apparatus has at least one AC voltage coil arrangement (145A, 145B, 345A, 345B) connected to an AC voltage source (140A, 140B, 340) and at least one DC voltage coil arrangement (135A, 135B, 335) separate from the AC voltage coil arrangement and connected to a DC voltage source (130A, 130B, 330).

9. Device according to either of claims 7 or 8, wherein the magnetization apparatus has at least one magnetization yoke (120A, 120B, 220) having a yoke core, on which an AC voltage coil arrangement and a DC voltage coil arrangement are wound, wherein a magnetization yoke is preferably embodied as a substantially U-shaped magnetization yoke, the free ends of which serve as pole shoes and are oriented substantially radially with respect to the test sample surface, wherein the pole shoes are arranged, in particular, approximately symmetrically on both sides of an assigned test probe (110A, 110B, 210, 310).

10. Device according to any of claims 7 to 9, wherein the DC field magnetization unit comprises an AC voltage source (440B) and a rectifier (449) connected to the AC voltage source, wherein an inductive transformer (445B) operating in a contactless fashion is preferably arranged between the AC voltage source (440B) and the rectifier (449).

11. Device according to any of claims 7 to 10, wherein an AC voltage source of the AC field magnetization unit is designed to generate AC voltages in the range of 3 kHz to 12 kHz and/or current intensities of up to a plurality of amperes, in particular up to 20 amperes or more.

12. Device according to any of claims 7 to 11, **characterized in that** the DC field magnetization means are fitted to a rotary head such that they can be moved around the test sample (150).

13. Device according to any of claims 7 to 12, **characterized by** an evaluation apparatus for processing probe signals of the at least one magnetic-field-sensitive test probe (110A, 110B, 210, 310), wherein the evaluation apparatus is designed to evaluate magnetic flux inhomogeneities detected by the test probe and to process them to form fault signals, wherein, in particular, a fault amplitude of the fault signal is evaluated for characterizing defects.

## Revendications

1. Procédé pour détecter des défauts proches de la surface dans un échantillon (150, 250, 350) composé au moins partiellement de matériau ferromagnétique, dans lequel un volume de contrôle de l'échantillon est magnétisé puis palpé pour détecter les champs de dispersion provoqués par des défauts, le volume de contrôle étant magnétisé au moyen d'un champ magnétique continu et simultanément au moyen d'un champ magnétique alternatif superposé au champ continu, **caractérisé en ce qu'**un champ magnétique alternatif est généré avec une fréquence de champ alternatif d'au moins 1 kHz et **en ce qu'**un mouvement relatif entre l'échantillon et le champ magnétique continu agissant sur l'échantillon ainsi que le champ magnétique alternatif superposé au champ continu est généré, lequel présente une composante de vitesse relative qui est orientée pour l'essentiel dans la direction des lignes de champ magnétique du champ continu à l'intérieur de l'échantillon, cette composante de vitesse relative étant au moins égale à 0,3 m/s, dans lequel le champ continu et le champ alternatif sont injectés par couplage dans le volume de contrôle de telle sorte que le flux d'induction généré par le champ continu et le flux d'induction généré par le champ alternatif présentent pour l'essentiel la même orientation, dans lequel le champ magnétique continu est injecté par couplage dans l'échantillon de telle sorte que les lignes de champ du champ magnétique continu à l'intérieur de l'échantillon s'étendent dans certaines portions approximativement dans le sens du pourtour et/ou pour l'essentiel perpendiculairement à un axe longitudinal de l'échantillon, le mouvement relatif étant obtenu par une rotation relative entre l'échantillon (150, 250) et une unité de magnétisation à champ continu.

2. Procédé selon la revendication 1, dans lequel la composante de vitesse relative mesurée dans la direction des lignes de champ du champ continu est comprise dans la plage de 1 m/s à 5 m/s.

3. Procédé selon l'une des revendications précédentes, dans lequel la fréquence du champ alternatif est comprise entre 3 kHz et 12 kHz.

4. Procédé selon l'une des revendications précédentes, dans lequel l'intensité de champ magnétique H_{DC} du champ continu dans le volume de contrôle est au moins égale à la moitié, notamment au moins exactement égale à l'intensité de champ magnétique H_{AC} du champ alternatif et/ou au maximum égale à 20 fois l'intensité de champ magnétique du champ alternatif, un rapport d'intensité de champ H_{DC}/H_{AC} entre l'intensité de champ magnétique H_{DC} du champ continu et l'intensité de champ magnétique H_{AC} du champ alternatif étant de préférence compris entre 1 et 5.

5. Procédé selon l'une des revendications précédentes, dans lequel l'intensité de champ magnétique H_{DC} du champ continu est comprise entre environ 10 % et environ 95 % de l'intensité de champ de saturation du matériau de l'échantillon dans le volume de contrôle, de préférence entre environ 70 % et environ 85 % de l'intensité de champ de saturation et/ou dans lequel une somme d'intensités de champ ΣH = H_{AC} + H_{DC} de l'intensité de champ magnétique H_{DC} du champ continu et de l'intensité de champ magnétique H_{AC} du champ alternatif est comprise entre environ 10 % et environ 100 % de l'intensité de champ de saturation du matériau de l'échantillon dans le volume de contrôle, de préférence entre environ 70 % et environ 85 % de l'intensité de champ de saturation.

6. Procédé selon l'une des revendications précédentes, dans lequel les champs de dispersion magnétiques sont détectés à l'aide d'une sonde à flux de dispersion sensible aux champs magnétiques et une interprétation des signaux de sonde de la sonde à flux de dispersion est conçue pour l'interprétation des signaux de flux de dispersion, une amplitude du signal de sonde étant notamment interprétée pour la caractérisation des défauts.

7. Équipement pour détecter des défauts proches de la surface dans un échantillon (150, 250, 350) composé au moins partiellement de matériau ferromagnétique, comprenant :
un dispositif de magnétisation pour magnétiser un volume de contrôle de l'échantillon et
au moins une sonde de contrôle (110A, 110B, 210, 310) sensible aux champs magnétiques pour détecter des champs de dispersion provoqués par des défauts, le dispositif de magnétisation incluant une unité de magnétisation à champ continu pour générer un champ magnétique continu et une unité de magnétisation à champ alternatif pour générer un champ magnétique alternatif superposé au champ continu dans le volume de contrôle, **caractérisé en ce que**
l'unité de magnétisation à champ continu et l'unité de magnétisation à champ alternatif sont configurées de manière telle que le champ continu et le champ alternatif sont injectés par couplage dans le volume de contrôle de telle sorte que le flux d'induction généré par le champ continu et le flux d'induction généré par le champ alternatif présentent pour l'essentiel la même orientation,
**en ce qu'**une source de tension alternative du dispositif de magnétisation à champ alternatif est conçue pour générer une tension alternative ayant une fréquence d'au moins 1 kHz et **en ce que** des dispositifs sont prévus pour générer un mouvement relatif entre l'échantillon (150, 250, 350) et le champ magnétique continu agissant sur l'échantillon, le mouvement relatif comprenant une rotation relative entre l'échantillon et une unité de magnétisation à champ continu et présentant une composante de vitesse relative qui est orientée pour l'essentiel dans la direction des lignes de champ magnétique du champ continu à l'intérieur de l'échantillon, cette composante de vitesse relative étant au moins égale à 0,3 m/s, de sorte que l'équipement est configuré pour mettre en oeuvre le procédé selon l'une des revendications 1 à 6.

8. Équipement selon la revendication 7, dans lequel le dispositif de magnétisation présente au moins un arrangement de bobines à champ alternatif / champ continu (235, 435A, 435B), lequel est raccordé ou peut être raccordé électriquement simultanément à une source de tension alternative et à une source de tension continue, ou dans lequel le dispositif de magnétisation présente au moins un arrangement de bobines à tension alternative (145A, 145B, 345A, 345B) raccordé à une source de tension alternative (140A, 140B, 340) et au moins un arrangement de bobines à tension continue (135A, 135B, 335) séparé de l'arrangement de bobines à tension alternative et raccordé à une source de tension continue (130A, 130B, 330).

9. Équipement selon l'une des revendications 7 ou 8, dans lequel le dispositif de magnétisation présente au moins une culasse de magnétisation (120A, 120B, 220) munie d'un noyau de culasse, autour duquel sont enroulés un arrangement de bobines à tension alternative et un arrangement de bobines à tension continue, une culasse de magnétisation étant de préférence réalisée sous la forme d'une culasse de magnétisation essentiellement en forme de U dont les extrémités libres servent de pièces polaires et sont orientées pour l'essentiel dans le sens radial par rapport à la surface de l'échantillon, les pièces polaires étant notamment disposées à peu près symétriquement des deux côtés d'une sonde de contrôle (110A, 110B, 210, 310) associée.

10. Équipement selon l'une des revendications 7 à 9, dans lequel l'unité de magnétisation à champ continu comprend une source de tension alternative (440B) et un redresseur (449) raccordé à la source de tension alternative, un translateur (445B) inductif fonctionnant sans contact étant de préférence disposé entre la source de tension alternative (440B) et le redresseur (449).

11. Équipement selon l'une des revendications 7 à 10, dans lequel une source de tension alternative de l'unité de magnétisation à champ alternatif est conçue pour générer des tensions alternatives dans la plage de 3 kHz à 12 kHz et/ou des intensités de champ pouvant atteindre plusieurs ampères, notamment jusqu'à 20 Ampères ou plus.

12. Équipement selon l'une des revendications 7 à 11, **caractérisé en ce que** des moyens de magnétisation à champ continu sont montés sur une tête rotative de telle sorte qu'ils puissent être déplacés autour de l'échantillon (150).

13. Équipement selon l'une des revendications 7 à 12, **caractérisé par** un dispositif d'interprétation pour traiter des signaux de sonde de l'au moins une sonde de contrôle (110A, 110B, 210, 310) sensible aux champs magnétiques, le dispositif d'interprétation étant configuré pour interpréter les défauts d'homogénéité du flux magnétique détectés par la sonde de contrôle et pour les conditionner en signaux de défaut, une amplitude de défaut du signal de défaut étant notamment interprétée pour la caractérisation des défauts.
